Europäisches Patentamt

European Patent Office

Office européen des brevets

(19)

(11) Publication number: **0 021 786**
**B1**

(12) **EUROPEAN PATENT SPECIFICATION**

(45) Date of publication of patent specification: **24.08.83**

(51) Int. Cl.³: **C 03 C 17/27, C 03 C 17/23**

(21) Application number: **80302053.6**

(22) Date of filing: **18.06.80**

(54) Coated glass article and coating compositions therefor.

(30) Priority: **18.06.79 US 49716**

(43) Date of publication of application:
**07.01.81 Bulletin 81/1**

(45) Publication of the grant of the patent:
**24.08.83 Bulletin 83/34**

(84) Designated Contracting States:
**DE FR GB IT**

(56) References cited:
**FR - A - 2 314 902**
**US - A - 3 984 591**

(73) Proprietor: **FORD MOTOR COMPANY LIMITED**
**Eagle Way**
**Brentwood Essex CM13 3BW (GB)**
(84) **GB**
(73) Proprietor: **FORD-WERKE AKTIENGESELLSCHAFT**
**Ottoplatz 2 Postfach 21 03 69**
**D-5000 Köln 21 (DE)**
(84) **DE**
(73) Proprietor: **FORD FRANCE SOCIETE ANONYME**
**344 Avenue Napoléon Bonaparte B.P. 307**
**F-92506 Rueil Malmaison Cedex (FR)**
(84) **FR**
(73) Proprietor: **Ford Motor Company**
**The American Road**
**Dearborn MI 48121 (US)**
(84) **IT**

(72) Inventor: **Vong, Sandy Ting Shung**
**2808 Towner**
**Ann Arbor Michigan 48104 (US)**

(74) Representative: **Drakeford, Robert William et al,**
**Ford Motor Company Limited 15/448, Research &**
**Engineering Centre Laindon**
**Basildon Essex SS15 6EE (GB)**

Courier Press, Leamington Spa, England.

Coated glass article and coating compositions therefor

This invention relates to coated glass articles and compositions for coating such articles.

It is known in the art to apply mixtures of organic materials containing metals such as chromium, iron and cobalt to a heated glass surface in order to develop a coating on that surface consisting of the oxides of the three mentioned metals. When the organic based material is applied to a heated glass sheet, the organic portion of the spray volatilizes leaving the oxide form of the metal therebehind.

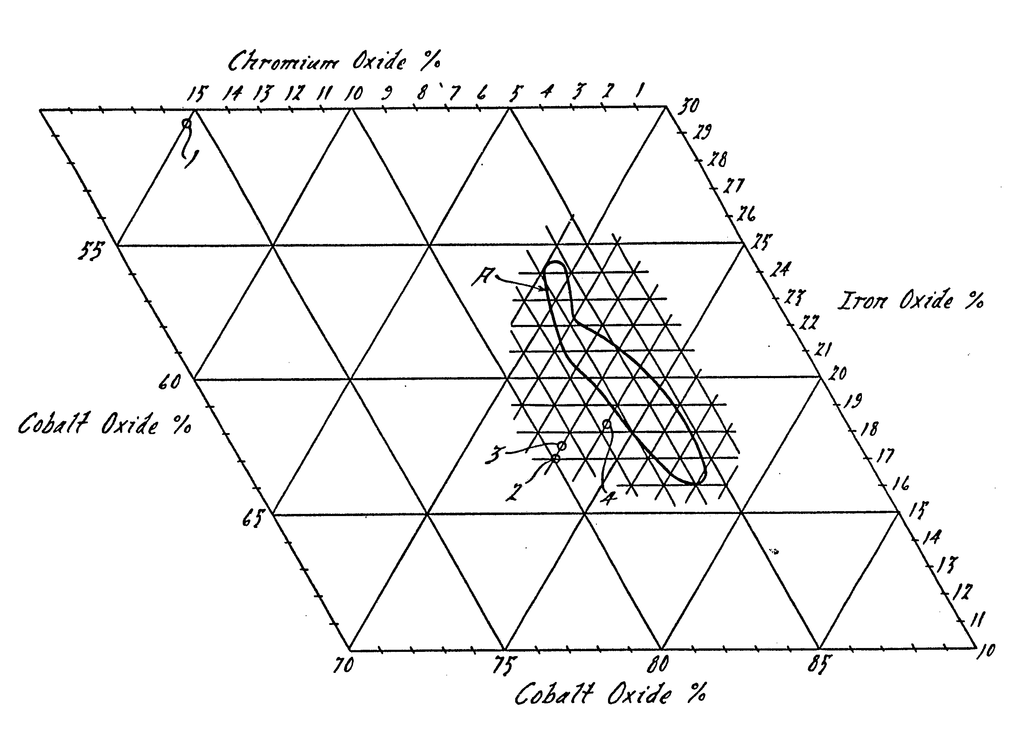

According to the present invention, there is provided an article of manufacture comprising a glass substrate; and a coating thereon comprising chromium oxide, cobalt oxide and iron oxide, characterised in that the composition lies within the enclosed area designated by the letter "A" in Figure 1.

The invention also includes coating compositions for glass comprising compounds of chromium, cobalt and iron capable of oxidation to their respective metal oxides when contacted with a heated glass surface characterised in that the proportions of the compounds are such as to form a coating on the glass having a composition which lies within the area designated by the letter A in Figure 1.

Broadly, the coating has a composition which falls in a range of chromium oxide from 5 to 8% by weight, iron oxide from 16 to $24\frac{1}{2}$% by weight, and cobalt oxide from 69 to $78\frac{1}{2}$% by weight, provided that the composition contains at least 19% by weight iron oxide when it contains $7\frac{1}{2}$% by weight or more chromium oxide, and contains no more than 22% by weight iron oxide when it contains less than 6% by weight chromium oxide. The preferred specific compositions are those falling within the area designated by the letter "A" in Figure 1. By applying compositions falling within this area to a glass substrate, the resulting coating has a greater durability than coatings falling outside of this area. The greater durability is shown by two testing procedures which will be described hereinbelow.

The preferred glass substrate upon which the coating is developed is a glass substrate which has a green body colour thereto.

Preferred embodiments of the invention will now be described, by way of example only, with reference to the accompanying drawing which is a tri-axial diagram indicating within the enclosed area designated by the letter "A" the various compositions of the three oxides forming a coating on a glass substrate which provide an improved and more tenacious coating than the coatings formed by compositions falling outside of the enclosed area.

It is known in the art that the application of an organic material containing the metals chromium, iron and cobalt to a glass surface will develop a coating on that glass surface. The glass surface must be heated to a temperature sufficient to cause a volatilization of the organic portion of the spray materials and an oxidizing of the metallic components thereof to their respective metallic oxides.

The commercially available coated glass substrated known to us are indicated in the tri-axial drawing of Figure 1. The number 1 indicates the composition of a coated surface of a coated glass product manufactured by a French company. Number 2 indicates the composition of a coated glass product having a nominal thickness of 5.55 mm (7/32 inch) manufactured by a United States company. Number 3 indicates the general coating composition of a 5.55 mm (7/32 inch) nominal thickness glass product manufactured by a United States company. Number 4 indicates a 3.18 mm (1/8 inch) nominal thickness coated glass product manufactured by a United States company. In all four cases, the compositions fall outside of the area designated by the letter "A" in Figure 1. In all cases, the coated surface did not have a durability as good as the durability of compositions located in the aforementioned area designated by the letter "A".

Durability of the coatings was tested by two procedures. A first procedure is one in which a coated sample is subjected to a five hour hydrochloric acid vapor test. In this case, hydrochloric acid vapors surrounded the material and would attack the coating on the glass. An attack of the coating changes the level of transmission of solar energy through the glass. There is a greater amount of energy transmitted as the durability or the film is attacked. A change in transmission characteristics of the coated glass to the transmission of energy therethrough is considered acceptable if it is in a range of 15% or less, any greater change of the film being considered unacceptable.

The second test is a test in which the sample is heat tempered initially. Thereafter, the tempered test sample is subjected to a humidity test in which the sample is subjected to a 100% humidity at 49°C (120°F) for a period of 6 weeks. This high humidity can cause the coating on the surface to loose its adherence to the surface and come free. The measurement of durability is that the surface coating stays in place for the prolonged period of time and no less than 1% of the coating is removed therefrom. If any greater amount of material is removed, the sample is rejected as failing.

Reference is now made to Figure 1. In Figure 1 there is an enclosed area generally designated by the letter "A". If the oxide content of the coating on a glass ribbon falls within the area identified, it generally passes both of the above-described testing procedures. This area is generally bounded or falls in a range of from 5 to 8% by weight chromium oxide, from 16 to 24.5 % by weight iron oxide, and from 69 to 78.5% by weight cobalt oxide. However, the area defined is one which has some variation and the particular film composition should fall within the area in order to achieve the best uniform film characteristics.

In accordance with a preferred embodiment of the method of this invention, the glass to be coated consists of a glass which has a greenish body color and is made from a melt of the following materials: $SiO_2$—65 to 74% by weight; $Na_2O$—11 to 15% by weight; $K_2O$—0 to 5% by weight; CaO—6 to 15% by weight; MgO—1 to 6% by weight; $Fe_2O_3$—0.2 to 0.8% by weight; and $Al_2O_3$—0 to 5% by weight, with CaO+MgO being about 13% by weight. The glass is melted in a glass melting chamber and flowed out upon a tin bath as is done in a flat process. The glass ribbon manufactured by this process is withdrawn from the glass manufacturing chamber. While still heated to a temperature of 538°C±93°C (1000°F±200°F) upon its emergence from the float glass chamber, the glass ribbon is sprayed with a solution of chromium, iron and cobalt in an organic vehicle. In accordance with the proportions of the material in the original spray, the three metallic materials are oxidized to form a metallic oxide coating on the glass having the three metals present. If the three metallic elements are present in the final film composition, in accordance to the percentages indicated in the enclosed area of Figure "A", the coating on the glass sheet will be of higher quality with respect to the two testing procedures described than a composition which falls outside of the range.

The following examples illustrate the invention.

In each example, aceylacetonate derivatives of iron copper and cobalt were formulated into a composition suitable for spraying on to hot glass in accordance with known techniques. The solutions were then sprayed on to green body coloured glass at a temperature of 538°C (1000°F), whereupon the solution oxidised to form a permanent coloured coating on the glass. The glass was then subjected to acid resistance and humidity tests as described previously. The results of the tests are set forth in the Table.

| Example no. | Coating composition (% by weight) | | | Humidity test | Acid resistance test |
| --- | --- | --- | --- | --- | --- |
| | Cobalt oxide | Iron oxide | Chromium oxide | | |
| 1 | 76.6 | 17.2 | 6.2 | passed | passed |
| 2 | 74.6 | 19.6 | 5.8 | " | " |
| 3 | 71.7 | 21.1 | 7.2 | " | " |

## Claims

1. An article of manufacture comprising a glass substrate and a coating thereon comprising chromium oxide, cobalt oxide and iron oxide characterised in that the coating is composed of from 5 to 8% by weight chromium oxide, from 16 to 24.5% by weight iron oxide and from 69 to 78.5% by weight cobalt oxide provided that the coating contains not less than 19% by weight iron oxide when it contains 7.25% by weight or more chromium oxide, and contains no more than 22% by weight iron oxide if it contains less than 6% by weight chromium oxide.

2. An article according to claim 1 wherein the composition lies within the enclosed area designated by the letter "A" in Figure 1.

3. An article according to claim 1 or claim 2 wherein said glass substrate is a green body coloured glass.

4. An article according to any one of claims 1 to 3 wherein said glass substrate has the following composition: $SiO_2$—65 to 74% by weight; $Na_2O$—11 to 15% by weight; $K_2O$—0 to 5% by weight; CaO—6 to 15% by weight; MgO—1 to 6% by weight; $Fe_2O_3$—0.2 to 0.8%

by weight; and $Al_2O_3$—0 to 5% by weight; with CaO+MgO being about 13% by weight.

5. A coating composition comprising compounds of iron, chromium and cobalt capable of oxidation to their respective oxides on contact with a heated glass surface, characterised in that the proportion of the compounds are such as to form a coating on the glass having a composition as defined in claim 1 or claim 2.

## Revendications

1. Produit manufacturé qui comprend un substrat en verre et sur celui-ci un revêtement comprenant de l'oxyde de chrome, de l'oxyde de cobalt et de l'oxyde de fer, caractérisé en ce que le revêtement est composé de 5 à 8% en poids d'oxyde de chrome, de 16 à 24,5% en poids d'oxyde de fer et de 69 à 78,5% en poids d'oyxde de cobalt, avec la restriction que le revêtement contient non moins de 19% en poids d'oxyde de fer lorsqu'il contient 7,25% en poids ou davantage d'oxyde de chrome et ne contient pas plus de 22% en poids d'oxyde de fer s'il contient moins de 6% en poids d'oxyde de chrome.

2. Produit suivant la revendication 1, dans lequel la composition se trouve à l'intérieur de la surface fermée désignée par la lettre "A" à la Fig. 1.

3. Produit suivant la revendication 1 ou 2, dans lequel le substrat en verre est un verre coloré en vert dans la masse.

4. Produit suivant l'une quelconque des revendications 1 à 3, dans lequel le substrat en verre a la composition suivante:

| | | |
|---|---|---|
| $SiO_2$ | — | 65 à 74% en poids |
| $Na_2O$ | — | 11 à 15% en poids |
| $K_2O$ | — | 0 à 5% en poids |
| CaO | — | 6 à 15% en poids |
| MgO | — | 1 à 6% en poids |
| $Fe_2O_3$ | — | 0,2 à 0.8% en poids |
| $Al_2O_3$ | — | 0 à 5 en poids; |

avec CaO+MgO étant d'environ 13% en poids.

5. Composition de revêtement qui comprend des composés du fer, du chrome et du cobalt susceptibles d'oxydation à leurs oxydes respectifs au contact d'une surface de verre chauffée, caractérisée en ce que les proportions des composés sont de nature à former sur le verre un revêtement ayant une composition telle que définie dans la revendication 1 ou 2.

## Patentansprüche

1. Fertigungsartikel, bestehend aus einer Glasunterlage und einem aus Chromoxyd, Kobaltoxyd und Eisenoxyd bestehenden Ueberzug darauf, dadurch gekennzeichnet, dass der Ueberzug aus 5 bis 8 Gew.-% Chromoxyd, 16 bis 24,5 Gew.-% Eisenoxyd und 69 bis 78,5 Gew.-% Kobaltoxyd besteht, mit der Massgabe, dass der Ueberzug nicht weniger als 19 Gew.-% Eisenoxyd enthält, wenn der Chromoxydgehalt 7,25, Gew.-% oder mehr beträgt, und nicht mehr als 22 Gew.-% Eisenoxyd enthält, wenn der Chromoxydgehalt weniger als 6 Gew.-% beträgt.

2. Artikel nach Anspruch 1, worin die Zusammensetzung innerhalb des in Figur 1 mit dem Buchstaben "A" bezeichneten umschlossenen Gebiets liegt.

3. Artikel nach Anspruch 1 oder 2, worin als solche Glasunterlage ein grünes, in der Masse gefärbtes Glas vorliegt.

4. Artikel nach einem der Ansprüche 1 bis 3, worin diese Glasunterlage die folgende Zusammensetzung aufweist: $SiO_2$—65 bis 74 Gew.-%, $Na_2O$—11 bis 15 Gew.-%, $K_2O$—0 bis 5 Gew.-%, CaO—6 bis 15 Gew.-%, MgO—1 bis 6 Gew.-%, $Fe_2O_3$—0,2 bis 0,8 Gew.-% und $Al_2O_3$—0 bis 5 Gew.-%, wobei CaO+MgO ungefähr 13 Gew.-% beträgt.

5. Ueberzugszusammensetzung, die Eisen-, Chrom- und Kobaltverbindungen enthält, welche bei Berührung mit einer erhitzten Glasoberfläche zu ihren entsprechenden Oxyden oxydierbar sind, dadurch gekennzeichnet, dass solche Anteile der Verbindungen vorliegen, dass sich auf dem Glas ein Ueberzug mit einer wie in Anspruch 1 oder 2 definierten Zusammensetzung bildet.